# EUROPEAN PATENT APPLICATION

(11) **EP 2 389 038 A1**
(43) Date of publication of application: **23.11.2011**
(21) Application number: 10731261.3
(22) Date of filing: 14.01.2010
(51) Int. Cl.: H04W 52/04, H04B 1/707, H04W 72/04

(54) **BASE STATION, WIRELESS COMMUNICATION SYSTEM, AND WIRELESS COMMUNICATION METHOD**

(30) Priority: 14.01.2009 JP 2009005901
(71) Applicant: NTT DOCOMO, INC., Chiyoda-ku Tokyo 100-6150 (JP)
(72) Inventor: GOTO, Yoshikazu, Tokyo 100-6150 (JP); HAYASHI, Takahiro, Tokyo 100-6150 (JP); HANAKI, Akihito, Tokyo 100-6150 (JP); TOMITA, Morikazu, Tokyo 100-6150 (JP); TAKAGI, Yukiko, Tokyo 100-6150 (JP)
(74) Representative: HOFFMANN EITLE
(86) International application number: PCT/JP2010/050306
(87) International publication number: WO 2010/082592

(57) **Abstract**

A base station includes a measuring unit and a setting unit. The measuring unit configured to measure at least any one piece of information of an absolute value of received total wideband power in the cell, a dispersion value of the received total wideband power in the cell, a reception success rate which is a rate of success in packet reception in the cell, and a simultaneous connecting user number which is the number of radio terminals connected to the cell simultaneously. The setting unit configured to set target received total wideband power which is a target for the received total wideband power in the cell based on information measured by the measuring unit.

## Description

### TECHNICAL FIELD

The present invention relates to a base station, a radio communication system, and a radio communication method for performing a radio communication between a radio terminal and a cell.

### BACKGROUND ART

Conventionally, a radio communication system including a base station has been known. The base station has a single or multiple cells, and each cell performs radio communications with a radio terminal.

Recently, a technique in which a base station performs assignment of radio resources and the like has been proposed with a view to improving a throughput, shortening a delay time and other purposes. Note that such a technique (hereinafter, a second technique) is sometimes referred to as HSUPA (High Speed Uplink Packet Access) or EUL (Enhanced Uplink) (for example, non-patent documents 1 and 2).

In this technique, a cell controls assignment of radio resources to a radio terminal so as to approximate received total wideband power (RTWP) of uplink user data which is received from the radio terminal to the target RTWP. In this way, the radio resources can be effectively utilized.

It should be noted that as the target RTWP becomes larger, a radio resource assignable to the radio terminal increases, and thus an uplink throughput is improved. However, as the target RTWP becomes larger, a required transmission power of the radio terminal increases. Accordingly, under a general environment in which the transmission power of the radio terminal is limited by a maximum value, an increase in the target RTWP makes a cell radius smaller. In other words, it should be noted that a decrease in the target RTWP reduces call disconnection of users located far from the base station and deterioration of quality, and thereby improves communication stability.

In this regard, the target RTWP is generally determined according to a cell size (a cell radius). For example, for a cell having a small cell radius, large target RTWP is determined for improving an uplink throughput, but at the expense of the communication stability. On the other hand, for a cell having a large cell radius, small target RTWP is determined for improving the communication stability, but at the expense of the uplink throughput.

Even if the target RTWP is simply determined according to a cell radius, however, both of the improvement of the uplink throughput and the improvement of the communication stability cannot be sufficiently achieved together.

### PRIOR ART DOCUMENT

### NON-PATENT DOCUMENTS

Non-patent Document 1: "W-CDMA Mobile Communication System," under the supervision of Keiji Tachikawa, Maruzen Co., Ltd, pp. 187 to pp. 194
Non-patent Document 2: Homa Toskala, "HSDPA/HSUPA FOR UTMS," WILEY, pp. 64 to pp. 65

### SUMMARY OF THE INVENTION

A base station of aspect has a cell configured to perform a radio communication with a radio terminal. The base station includes: a measuring unit configured to measure at least any one piece of information of an absolute value of received total wideband power in the cell, a dispersion value of the received total wideband power in the cell, a reception success rate which is a rate of success in packet reception in the cell, and a simultaneous connecting user number which is the number of radio terminals connected to the cell simultaneously; and a setting unit configured to set target received total wideband power which is a target for the received total wideband power in the cell based on information measured by the measuring unit.

### BRIEF DESCRIPTION OF THE DRAWINGS

[Fig. 1] Fig. 1 is a drawing showing a radio communication system according to a first embodiment.
[Fig. 2] Fig. 2 is a block diagram showing a base station 100a according to the first embodiment.
[Fig. 3] Fig. 3 is a drawing showing received total wideband power (RTWP) and the target RTWP according to the first embodiment.
[Fig. 4] Fig. 4 is a drawing showing an example of transition of the RTWP according to the first embodiment.
[Fig. 5] Fig. 5 is a drawing showing how to set the target RTWP according to the first embodiment.
[Fig. 6] Fig. 6 is a drawing showing how to set the target RTWP according to the first embodiment.
[Fig. 7] Fig. 7 is a drawing showing how to set the target RTWP according to the first embodiment.
[Fig. 8] Fig. 8 is a drawing showing how to set the target RTWP according to the first embodiment.
[Fig. 9] Fig. 9 is a flowchart showing an operation of a base station 100 according to the first embodiment.
[Fig. 10] Fig. 10 is a drawing showing how to set the target RTWP according to Modification 1 of the first embodiment.
[Fig. 11] Fig. 11 is a drawing showing RTWP and a margin according to Modification 2 of the first embodiment.
[Fig. 12] Fig. 12 is a drawing showing how to set the target RTWP according to Modification 2 of the first embodiment.
[Fig. 13] Fig. 13 is a drawing showing how to set the target RTWP according to Modification 2 of the first embodiment.
[Fig. 14] Fig. 14 is a drawing showing how to set the target RTWP according to Modification 2 of the first embodiment.
[Fig. 15] Fig. 15 is a drawing showing how to set the target RTWP according to Modification 2 of the first embodiment.
[Fig. 16] Fig. 16 is a drawing showing how to set the target RTWP according to Modification 3 of the first embodiment.

### MODES FOR CARRYING OUT THE INVENTION

A radio communication system according to embodiments of the present invention will be described referring to the drawings. Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### [Summary of Embodiments]

The summary of an embodiment is briefly described below. A base station according to an embodiment includes a measuring unit and a setting unit. The measuring unit measures at least any one piece of information of an absolute value of received total wideband power (RTWP) in a cell, a dispersion value of RTWP in the cell, a reception success rate which is a rate of success in packet reception in the cell, and a simultaneous connecting user number which is the number of radio terminals connected to the cell simultaneously. The setting unit sets the target RTWP which is total RTWP to be a target in the cell based on the information measured by the measuring unit.

As described above, the setting unit sets the target RTWP based on not only cell radius information but also information on other than a cell radius (an absolute value of RTWP, a dispersion value of RTWP, a reception success rate, or a simultaneous connecting user number). Accordingly, as compared with a case where the target RTWP is set simply based on a cell radius, the target RTWP can be properly set. In doing so, both of an uplink throughput and communication stability can be improved at the same time.

### [First Embodiment]

### (Configuration of Radio Communication System)

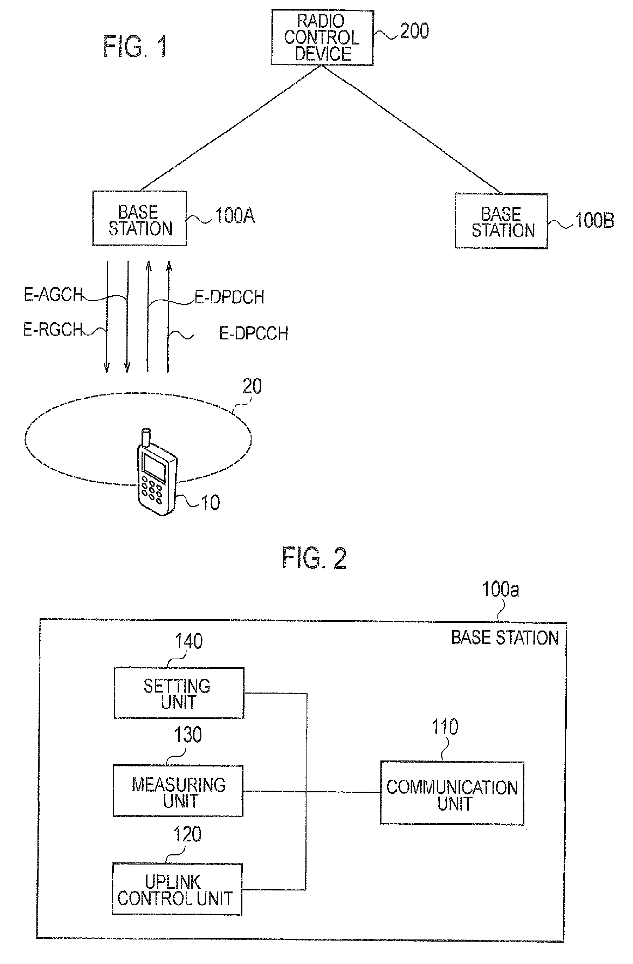

The configuration of a radio communication system according to a first embodiment is described below by referring to the drawings. Fig. 1 is a drawing showing a radio communication system according to the first embodiment.

As shown in Fig. 1, the radio communication system has a radio terminal 10, base stations 100 (a base station 100a and a base station 100b) and a radio control device 200. Note that Fig. 1 shows a case where the radio terminal 10 performs communications with the base station 100a.

The radio terminal 10 is present in a cell 20 which is controlled by the base station 100a. The radio terminal 10 performs radio communications with the cell 20 provided in the base station 100a.

The cell 20 is a cell corresponding to a framework in which the radio control device 200 performs assignment of radio resources. The framework in which the radio control device 200 performs assignment of radio resources is sometimes referred to as R99 (Release 99).

In addition, the cell 20 is a cell corresponding to a framework in which the base station 100 performs assignment of uplink radio resources. The framework in which the base station 100 performs assignment of uplink radio resources and the like is sometimes referred to as HSUPA (High Speed Uplink Packet Access) or EUL (Enhanced Uplink).

It should be noted that a "cell" is basically used as a term indicating a function to perform communications with the radio terminal 10. It should be also noted that there is a case where a "cell" is used as a term indicating an area in which the radio terminal 10 is present.

The radio terminal 10 transmits uplink data to the base station 100a. Specifically, the radio terminal 10 transmits uplink user data to the base station 100a via Dedicated Physical Data Channel (DPDCH) in a framework in which the radio control device 200 performs assignment of radio resources and the like.

The radio terminal 10 transmits uplink control data to the base station 100a via Dedicated Physical Control Channel (DPCCH) in the framework in which the radio control device 200 performs assignment of radio resources and the like.

Note that similar to general closed loop power control, transmission power of DPCCH is controlled by a TPC command which is received from the base station 100a. The TPC command is a command which is created by the base station 100a by comparing a received quality of an uplink signal with a target quality.

On the other hand, the radio terminal 10 transmits uplink user data to the base station 100a via Enhanced Dedicated Physical Data Channel (E-DPDCH) in the framework in which the base station 100a performs assignment of radio resources and the like.

In addition, the radio terminal 10 transmits uplink control data to the base station 100a via Enhanced Dedicated Physical Control Channel (E-DPCCH) or E-DPDCH in the framework in which the base station 100a performs assignment of radio resources and the like. The uplink control data contains scheduling information (UL Scheduling Information) to which the base station 100a refers when assigning a radio resource.

The scheduling information includes "HLID (Highest priority Logical Channel ID)," "TEBS (Total E-DCH Buffer Status)," "HLBS (Highest priority Logical Channel Buffer Status)," "UPH (User Power Headroom)," or the like. The uplink control data other than the scheduling information includes "Happy Bit," "CQI," or the like (see 3GPP TS25.321 ver.7.5.09.2.5.3, "UL Scheduling Information").

The base station 100a performs radio communications with the radio terminal 10. For example, the base station 100a which manages the cell 20 performs radio communications with the radio terminal 10 which is present in the cell 20.

Specifically, the base station 100 receives uplink user data from the radio terminal 10 via a data channel such as DPDCH or E-DPDCH. On the other hand, the base station 100 transmits transmission rate control data for controlling a transmission rate of the uplink user data which is transmitted via E-DPDCH. Note that the transmission rate control data includes Absolute Grant (AG) for directly designating a transmission rate and

### Relative Grant (RG) for relatively designating a transmission rate.

The Absolute Grant (AG) is data (an index) to directly designate a transmission power ratio (E-DPDCH/DPCCH) which is assigned to the radio terminal 10 (see 3GPP TS25.212 Ver.7.5.0 4.10.1A.1, "Information field mapping of the Absolute Grant Value").

As described above, the Absolute Grant (AG) is a command to directly designate a value of a transmission rate without depending on the current transmission rate.

The Relative Grant (RG) is data ("Up," "drown," "Hold") to relatively designate a transmission power ratio (E-DPDCH/DPCCH) which is assigned to the radio terminal 10 (see 3GPP TS25.212 Ver. 7.5.0 3.2.5.2.1, "Relative Grants").

As described above, the Relative Grant (RG) is a command to relatively control the current transmission rate. Specifically, included are an increase command "Up" to designate an increase of the current transmission rate, a holding command "Hold" to designate holding of the current transmission rate, and a decrease command "Down" to designate a decrease of the current transmission rate. Note that the increase command is a command to designate an increase in a predetermined increase range and the decrease command is a command to designate a decrease in a predetermined decrease range. The predetermined increase range may be same as or smaller than the predetermined decrease range.

The base station 100a transmits AG to the radio terminal 10 via an E-DCH Absolute Grant Channel (E-AGCH). The base station 100a transmits RG to the radio terminal 10 via an E-DCH Relative Grant Channel (E-RGCH).

Note that DPDCH and DPCCH are omitted in Fig. 1 for simplifying the description.

### (Configuration of Base Station)

The configuration of the base station according to the first embodiment is described below by referring to the drawings. Fig. 2 is a block diagram showing the base station 100a according to the first embodiment.

As shown in Fig. 2, the base station 100a has a communication unit 110, an uplink control unit 120, a measuring unit 130, and a setting unit 140.

The communication unit 110 performs communications with the radio terminal 10 which is visiting the cell 20. Specifically, the communication unit 110 receives uplink user data from the radio terminal 10 via a data channel such as DPDCH or E-DPDCH. The communication unit 110 receives uplink control data from the radio terminal 10 via control channels such as DPCCH and E-DPCCH or E-DPDCH. On the other hand, the communication unit 110 transmits transmission rate control data (AG or RG) via a control channel such as E-AGCH or E-RGCH.

Note that the communication unit 110 communicates with an upper station (such as the radio control device 200 or an exchange) which manages the base station 100.

The uplink controller 120 controls uplink user data which is received via E-DPDCH.

Firstly, the uplink control unit 120 assigns a radio resource (a transmission rate or a transmission slot (process)) to the radio terminal 10 which uses the cell 20 as a serving cell. For example, the uplink control unit 120 controls Scheduling Grant (SG) to be assigned to the radio terminal 10 by transmitting AG or RG with reference to the uplink control data which is received from the radio terminal 10.

Note that SG is information indicating a transmission power ratio (E-DPDCH/DPCCH) which is assigned to the radio terminal 10. Note that the transmission power ratio and the transmission rate are associated with each other on a one-to-one basis, and thus SG may be considered not only as a term indicating a transmission power ratio which is assigned to the radio terminal 10 but also as a term indicating a transmission rate which is assigned to the radio terminal 10.

Secondly, the uplink control unit 120 determines for each block (a process) if the uplink user data generates an error. Thereafter, the uplink controller 120 requests the radio terminal 10 to retransmit the block with an error (hereinafter, an error block). The retransmission control technique is Hybrid Automatic Repeat Request (HARQ) which combines a block which is transmitted from the radio terminal 10 for the first time (hereinafter, a transmission block) with a block which is retransmitted from the radio terminal 10 (hereinafter, a retransmission block).

The measuring unit 130 measures at least any one piece of information of (1) an absolute value of RTWP in the cell 20, (2) a dispersion value of RTWP, in the cell 20, (3) a reception success rate which is a rate of success in packet reception in the cell 20, and (4) a simultaneous connecting user number which is the number of radio terminals 10 connected to the cell 20 simultaneously.

### (0) Received total wideband power

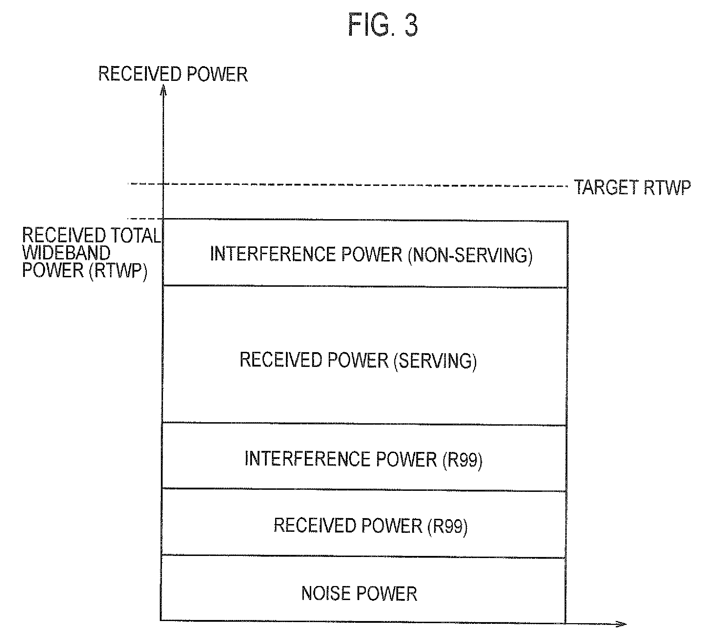

As shown in Fig. 3, the Received Total Wideband Power (RTWP) is a total of noise power, received power (R99), interference power (R99), received power (EUL), and interference power (EUL). Note that the interference power (EUL) is power of signal which is received from the radio terminal 10 using another cell as a serving cell. Here, the target RTWP is RTWP to be a target in the cell 20.

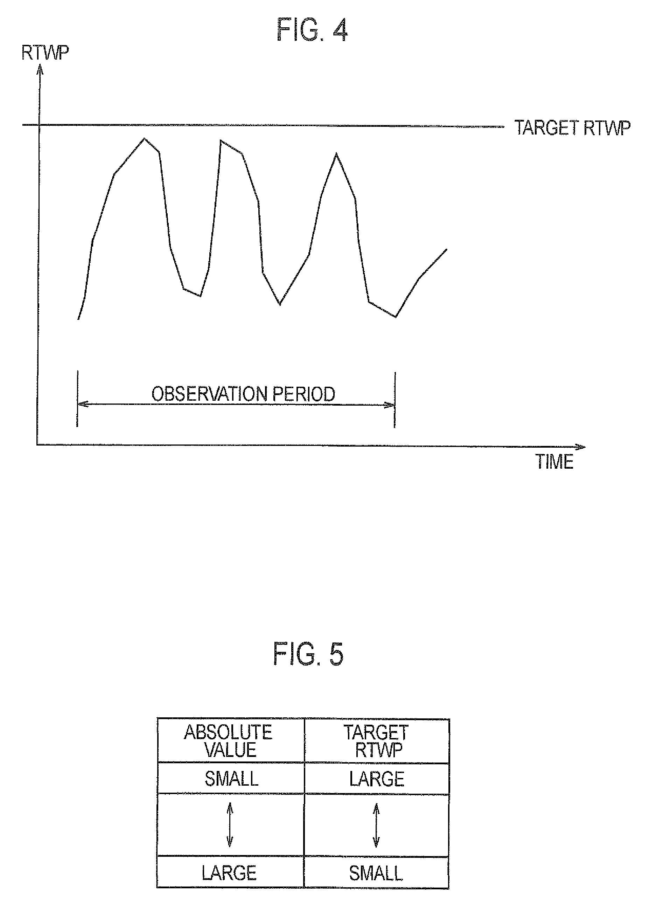

In addition, the above-described uplink control unit 120 controls assignment of radio resources so as to approximate RTWP to the target RTWP to effectively utilize the radio resources. It should be noted that as shown in Fig. 4, in practice, RTWP includes dispersion.

### (1) Absolute value of RTWP

An absolute value of RTWP is a value of RTWP during an observation period shown in Fig. 4. Note that an "absolute value" is a term to differentiate the term from a "dispersion value" to be described later and is a term to indicate a value of power. For example, the absolute value of RTWP may be a maximum value of RTWP during the observation period or may be a mean value of RTWP during the observation period.

### (2) Dispersion value of RTWP

A dispersion value of RTWP is a dispersion value of RTWP during an observation period shown in Fig. 4. Note that the dispersion value of RTWP is an index indicating dispersion of RTWP during the observation period.

### (3) Reception success rate

As described above, a reception success rate is a rate of success in packet reception in the cell 20. The reception success rate may be a rate that the base station 100 succeeds receiving a packet containing uplink user data or may be a rate that the radio terminal 10 succeeds receiving a packet containing downlink user data. Also, the reception success rate may be a rate of success in receiving a packet containing uplink user data and a packet containing downlink user data. Furthermore, the reception success rate may be a rate of success in receiving a packet containing control data for call control or a packet containing control data for radio communications. The control data for call control includes, for example, user information notified from a core network. The control data for the radio communications includes, for example, control data instructing an increase of transmission rate, a decrease of transmission rate, or a change of call type in radio communications.

For example, the reception success rate may be calculated according to "the number of calls responding to FACH (downlink control data) transmitted from the radio control device 200/the number of calls receiving RACH (uplink control data) by the radio control device 200."

Also, the reception success rate may be an incidence rate of call processing alarms. The call processing alarm is an alarm which is detected when call connection fails or an alarm which is detected when disconnection of communication occurs.

### (4) Simultaneous connecting user number

As described above, a simultaneous connecting user number is the number of radio terminals connected to the cell 20 simultaneously. In other words, the simultaneous connecting user number is the number of radio terminals 10 using the cell 20 as a serving cell.

Note that, statistically speaking, the simultaneous connecting user number depends on the dispersion value of RTWP. In other words, as the simultaneous connecting user number becomes larger, the dispersion value of RTWP becomes smaller, while as the simultaneous connecting user number becomes smaller, the dispersion value of RTWP becomes larger.

The setting unit 140 sets the target RTWP which is a target for the RTWP in the cell 20.

Firstly, the setting unit 140 sets the target RTWP based on cell radius information (such as information showing a size of a cell radius).

Secondly, the setting unit 140 performs fine-adjustment on the target RTWP which is set based on the cell radius information based on the information measured by the measuring unit 130.

A method of setting (performing fine-adjustment on) the target RTWP is described below by referring to Figs. 5 to 8.

As shown in Fig. 5, the setting unit 140 sets larger target RTWP as the absolute value of RTWP becomes smaller. The setting unit 140 sets smaller target RTWP as the absolute value of RTWP becomes larger.

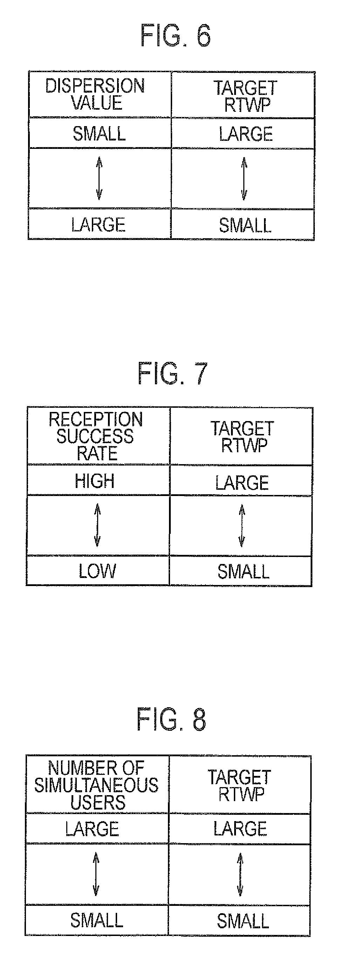

As shown in Fig. 6, the setting unit 140 sets larger target RTWP as the dispersion value of RTWP becomes smaller. The setting unit 140 sets smaller target RTWP as the dispersion value of RTWP becomes larger.

As shown in Fig. 7, the setting unit 140 sets larger target RTWP as the reception success rate becomes higher. The setting unit 140 sets smaller the target RTWP as the reception success rate becomes low.

As shown in Fig. 8, the setting unit 140 sets larger target RTWP as the simultaneous connecting user number becomes larger. The setting unit 140 sets smaller target RTWP as the simultaneous connecting user number becomes smaller.

### (Operation of Base Station)

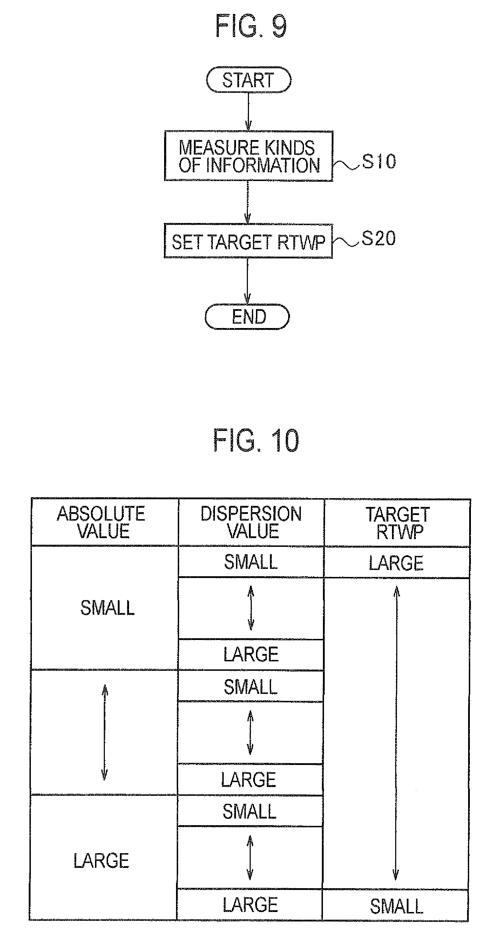

The operation of the base station according to the first embodiment is described below by referring to the drawings. Fig. 9 is a flowchart showing the operation of the base station 100a according to the first embodiment.

As shown in Fig. 9, at step S10, the base station 100a measures an absolute value of RTWP, a dispersion value of RTWP, a reception success rate or the simultaneous connecting user number.

At step 20, the base station 100a sets (performs fine-adjustment on) the target RTWP which is a target for the RTWP in the cell 20 based on the information measured at step S10.

### (Advantageous Effects)

In the first embodiment, the setting unit 140 sets the target RTWP based not only on cell radius information but also information on other than a cell radius (an absolute value of RTWP, a dispersion value of RTWP, reception success rate, or the simultaneous connecting user number). Accordingly, as compared with the case where the target RTWP is simply set based on a cell radius, the target RTWP can be properly set. With this, both of the uplink throughput and the communication stability can be improved at the same time.

### [Modification 1]

Modification 1 of the first embodiment is described below. In the following description, portions different from those of the first embodiment are mainly described.

Specifically, in Modification 1, illustration is given as an example of a case where the target RTWP is set based on both of an absolute value of RTWP and a dispersion value of RTWP.

The setting unit 140 sets the target RTWP, referring to a table shown in Fig. 10. In the table shown in Fig. 10, the absolute value of RTWP is classified into multiple categories and the dispersion value of RTWP is associated with each category.

As described above, the setting unit 140 reflects the absolute value of RTWP in preference to the dispersion value of RTWP, when setting the target RTWP. For example, larger target RTWP is set in the case where the absolute value of RTWP is "small" and the dispersion value of RTWP is "large" than in the case where the absolute value of RTWP is "large" and the dispersion value of RTWP is "small."

### [Modification 2]

Modification 2 of the first embodiment is described below. In the following description, portions different from those of the second embodiment are mainly described.

Specifically, in Modification 2, not RTWP but a difference (hereinafter, a margin) between an upper limit received power and the target RTWP is controlled.

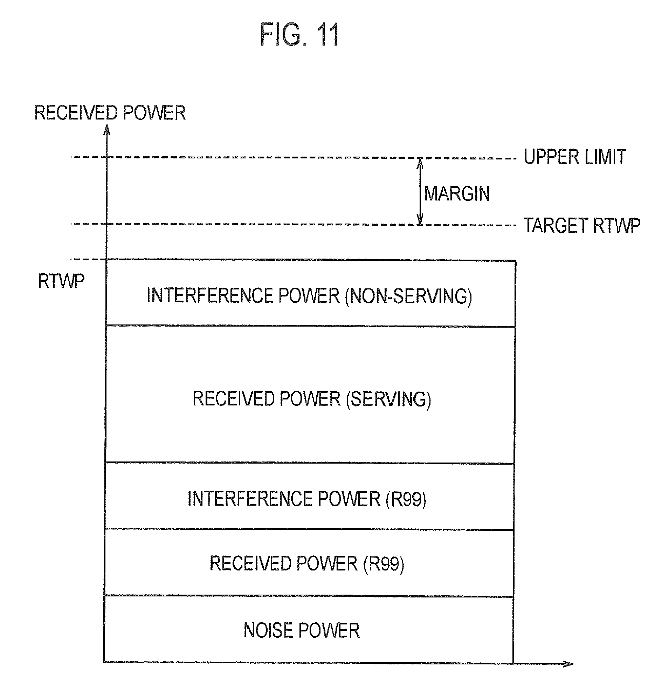

As shown in Fig. 11, a margin is a difference between an upper limit of RTWP (upper limit received power) which is determined in advance according to a capability of the cell 20 and the target RTWP. Note that similar to the first embodiment, RTWP is a total of noise power, received power (R99), interference power (R99), received power (EUL), and interference power (EUL).

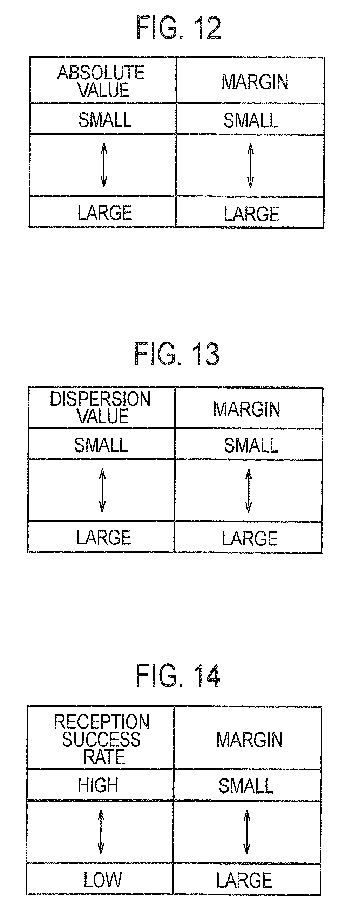

A method of setting a margin is described below by referring to Figs. 12 to 15.

As shown in Fig. 12, the setting unit 140 sets a smaller margin as the absolute value of RTWP becomes smaller. The setting unit 140 sets a larger margin as the absolute value of RTWP becomes larger.

As shown in Fig. 13, the setting unit 140 sets a smaller margin as the dispersion value of RTWP becomes smaller. The setting unit 140 sets a larger margin as the dispersion value of RTWP becomes larger.

As shown in Fig. 14, the setting unit 140 sets a smaller margin as the reception success rate becomes higher. The setting unit 140 sets a larger margin as the reception success rate becomes low.

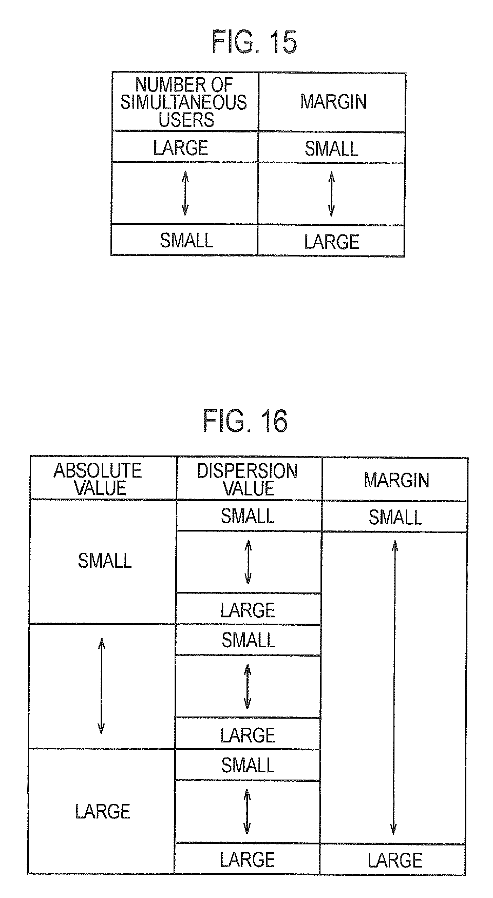

As shown in Fig. 15, the setting unit 140 sets a smaller margin as the simultaneous connecting user number becomes larger. The setting unit 140 sets a larger margin as the simultaneous connecting user number becomes smaller.

### [Modification 3]

Modification 3 of the first embodiment is described below. In the following description, portions different from those of modification 2 are mainly described.

Specifically, in Modification 3, illustration is given as an example of a case where a margin is set based on both of an absolute value of RTWP and a dispersion value of RTWP.

The setting unit 140 sets margin referring to a table shown in Fig. 16. In the table shown in Fig. 10, the absolute value of RTWP is classified into multiple categories and the dispersion value of RTWP is associated with each category.

As described above, the setting unit 140 reflects the absolute value of RTWP in preference to the dispersion value of RTWP when setting a margin. For example, a smaller margin is set in the case where the absolute value of RTWP is "small" and the dispersion value of RTWP is "large" than in the case where the absolute value of RTWP is "large" and the dispersion value of RTWP is "small."

The present invention has been described in detail using the above embodiment. However, it should not be understood that the description and drawings which constitute part of this disclosure limit the present invention. From this disclosure, various alternative embodiments, examples, and operation techniques will be easily found by those skilled in the art.

Although it is not described above, to set the target RTWP (or a margin), a size of the cell 20 (a cell radius) may be used in addition to the information measured by the measuring unit 130. As the cell 20 becomes larger, smaller target RTWP (or a larger margin) is set. As the cell 20 becomes smaller, larger target RTWP (or a smaller margin) is set.

In the above-described embodiment, the measuring unit 130 and the setting unit 140 are provided in the base station 100a. However, the embodiment is not limited to that configuration. For example, the measuring unit 130 and the setting unit 140 may be provided in a device (for example, the radio control device 200) which is provided in the radio communication system. The measuring unit 130 and the setting unit 140 may be dispersedly provided in the radio communication system.

### INDUSTRIAL APPLICABILITY

The present invention can provide a base station, a radio communication system, and a radio communication method that can improve an uplink throughput and communication stability at the same time.

## Claims

1. A base station which has a cell configured to perform a radio communication with a radio terminal, comprising:
a measuring unit configured to measure at least any one piece of information of an absolute value of received total wideband power in the cell, a dispersion value of the received total wideband power in the cell, a reception success rate which is a rate of success in packet reception in the cell, and a simultaneous connecting user number which is the number of radio terminals connected to the cell simultaneously; and
a setting unit configured to set target received total wideband power which is a target for the received total wideband power in the cell based on information measured by the measuring unit.

2. The base station according to claim 1, wherein
the measuring unit measures the absolute value of the received total wideband power, and
the setting unit increases the target received total wideband power as the absolute value of the received total wideband power becomes smaller.

3. The base station according to claim 1, wherein
the measuring unit measures the dispersion value of the received total wideband power, and
the setting unit increases the target received total wideband power as the dispersion value of received total wideband power becomes smaller.

4. The base station according to claim 1, wherein
the measuring unit measures the reception success rate, and
the setting unit increases the target received total wideband power as the reception success rate becomes higher.

5. The base station according to claim 1, wherein
the measuring unit measures a simultaneous connecting user number, and
the setting unit increases the target received total wideband power as the simultaneous connecting user number becomes larger.

6. The base station according to any one of claims 2 to 5, wherein
an upper limit received power which is an upper limit of received total wideband power is determined in the cell, and
the setting unit decreases a margin that is a difference between the upper limit received power and the target received total wideband power, when increasing the target received total wideband power.

7. The base station according to claim 1, wherein a packet used for calculating the reception success rate is a packet containing control data for call control, a packet containing control data for radio communication, and a packet containing user data.

8. The base station according to claim 1, wherein a packet used for calculating the reception success rate is a downlink packet, an uplink packet or both of an uplink packet and a downlink packet.

9. The base station according to claim 1, wherein
the measuring unit measures the absolute value of the received total wideband power and the dispersion value of the received total wideband power, and
the setting unit reflects the absolute value of the received total wideband power in preference to the dispersion value of received total wideband power in the setting of the target received total wideband power.

10. A radio communication system which has a cell configured to perform a radio communication with a radio terminal, comprising:
a measuring unit configured to measure at least any one piece of information of an absolute value of received total wideband power in the cell, a dispersion value of the received total wideband power in the cell, a reception success rate which is a rate of success in packet reception in the cell, and a simultaneous connecting user number which is the number of radio terminals connected to the cell simultaneously; and
a setting unit configured to set target received total wideband power which is a target for the received total wideband power in the cell based on information measured by the measuring unit.

11. A radio communication method for performing a radio communication between a radio terminal and a cell, the method comprising:
a step A of measuring at least any one piece of information of an absolute value of received total wideband power in the cell, a dispersion value of the received total wideband power in the cell, a reception success rate which is a rate of success in packet reception in the cell, and a simultaneous connecting user number which is the number of radio terminals connected to the cell simultaneously; and
a step B of setting target received total wideband power which is a target for the received total wideband power in the cell based on information measured at the step A.
